# EUROPÄISCHE PATENTANMELDUNG

(11) **EP 1 038 650 A2**
(43) Veröffentlichungstag der Anmeldung: **27.09.2000**
(21) Anmeldenummer: 00102524.6
(22) Anmeldetag: 07.02.2000
(51) Int. Cl.: B29C 47/00, B29C 47/88

(54) **Vorrichtung zum Erwärmen einer zwischen einem Vorzugsrollenpaar und einem Abzugsrollenpaar zu einer Schlauchfolienblase aufgeblasenen Schlauchfolienbahn**

(30) Priorität: 17.03.1999 DE 19911978
(71) Anmelder: Windmöller & Hölscher, D-49525 Lengerich (DE)
(72) Erfinder: Lage, Karl-Heinz, 49525 Lengerich (DE)

(57) **Zusammenfassung**

Eine Vorrichtung zum Erwärmen einer zwischen einem Vorzugsrollenpaar (3,4) und einem Abzugsrollenpaar (5) zu einer Schlauchfolienblase (6) aufgeblasenen Schlauchfolienbahn (1) besteht aus einem in einem Gestell gelagerten angetriebenen Vorzugsrollenpaar (3,4) und einem gegenüberliegenden, ortsfest gelagerten angetriebenen Abzugsrollenpaar (5) für die aus der aufgeblasenen Schlauchfolienblase (6) abgezogene Schlauchfolienbahn (1). Weiterhin sind Flachlegeeinrichtungen und Einrichtungen zum Aufblasen und Erwärmen der Schlauchfolienbahn (1) vorgesehen. Um der aufgeblasenen Schlauchfolienbahn (1) unabhängig von deren Durchmesser die richtige Wärmemenge zuführen zu können, bestehen die Einrichtungen zum Erwärmen aus konzentrisch um die Achse der aufgeblasenen Schlauchfolienbahn (1) angeordneten Heizelementen, die durch Stelltriebe in radialer Richtung auf die Schlauchfolienbahn (1) zu verfahrbar und von dieser abrückbar sind.

## Beschreibung

Die Erfindung betrifft eine Vorrichtung zum Erwärmen einer zwischen einem Vorzugsrollenpaar und einem Abzugsrollenpaar zu einer Schlauchfolienblase aufgeblasenen Schlauchfolienbahn mit einem in einem Gestell gelagerten, angetriebenen Vorzugsrollenpaar für eine flachliegende Schlauchfolienbahn, mit einem gegenüberliegenden, ortsfest gelagerten, angetriebenen Abzugsrollenpaar für die aus der aufgeblasenen Schlauchfolienblase abgezogene flachgelegte Schlauchfolienbahn, dem Flachlegeeinrichtungen, vorzugsweise keilförmig zueinander angeordnete Flachlegeplatten, vorgeschaltet sind, mit Einrichtungen zum Aufblasen der Schlauchfolienbahn zwischen den Vor- und Abzugsrollenpaaren zu einer Schlauchfolienblase und zum Nachfüllen von Blasluft und mit einer Einrichtung zum Erwärmen der aufgeblasenen Schlauchfolienbahn.

Es ist bekannt, eine im Schlauchfolienblasverfahren hergestellte und zu einer Rolle aufgewickelte Kunststoffschlauchfolienbahn nochmals durch Aufblasen zu einer Schlauchfolienblase und Erwärmen zu verstrecken, um der Kunststoffschlauchfolienbahn andere Eigenschaften oder verbesserte Festigkeitswerte zu verleihen. Das Erwärmen erfolgt dabei auf Temperaturen, die zur Erreichung der gewünschten veränderten Folieneigenschaften erforderlich sind. Vorzugsweise erfolgt die Erwärmung der aufgeblasenen Schlauchfolienbahn im Bereich ihres Einlaufs in die Schlauchfolienblase etwa bis auf ihre Warmumformbarkeitstemperatur (Glasübergangstemperatur). Das Aufblasen der von dem Vorzugsrollenpaar eingezogenen Schlauchfolienbahn erfolgt durch Injektionsnadeln, wobei zur Aufrechterhaltung des Luftdrucks der Schlauchfolienblase die Injektionsnadeln mitlaufend oder rotierend angeordnet sein können. Das Aufblasen der Schlauchfolienblase kann auch durch das Verdampfen von Flüssigkeiten erfolgen.

Eine Vorrichtung der eingangs angegebenen Art ist beispielsweise aus DE 198 44 434.6 bekannt. Bei dieser bekannten Vorrichtung wird die zu einem Schlauch aufgeblasene Kunststoffolienbahn von gestellfest angeordneten Heizringen mit Infrarotstrahlern, die den Folienschlauch konzentrisch einfassen, erwärmt.

Ein besonderes Problem bei Vorrichtungen der eingangs angegebenen Art besteht jedoch darin, daß zu Folienschläuchen aufgeblasene Kunststoffolienbahnen unterschiedlicher Durchmesser erneut durch Aufblasen zu einer Schlauchfolienblase verstreckt werden sollen. Die Zuführung der erforderlichen Wärmeenergie zu dem aufgeblasenen Folienschlauch läßt sich jedoch nur mit Schwierigkeiten bewerkstelligen, wenn die Heizringe in ihrem Durchmesser nicht auf dem Durchmesser des erneut zu verstreckenden Folienschlauches angepaßt sind.

Aufgabe der Erfindung ist es daher, eine Vorrichtung der eingangs angegebenen Art zu schaffen, bei der sich auch dann gezielt mit der Heizeinrichtung die notwendige Wärmeenergie zum Aufblasen der Schlauchfolienbahn zu einer Schlauchfolienblase zuführen läßt, wenn der aufzublasende Folienschlauch unterschiedliche Durchmesser aufweist.

Erfindungsgemäß wird diese Aufgabe dadurch gelöst, daß die Einrichtung zum Erwärmen aus konzentrisch um die Achse der aufgeblasenen Schlauchfolienbahn angeordneten Heizelementen besteht, die durch Stelltriebe in radialer Richtung auf die Schlauchfolienbahn verfahrbar und von dieser abrückbar sind.

In der erfindungsgemäßen Vorrichtung läßt sich dadurch der zu einem Folienschlauch aufgeblasenen Schlauchfolienbahn die richtige Wärmemenge zum Aufblasen zu einer Schlauchfolienblase gezielt zuführen, daß die einzelnen Heizelemente immer den richtigen oder gewünschten radialen Abstand zu der Schlauchfolienbahn aufweisen.

Zweckmäßigerweise bewegen die Stelltriebe sämtliche Heizelemente gleichzeitig in radialer Richtung. Zum Verfahren der einzelnen Heizelemente können von einer Steuereinrichtung gesteuerte Servomotoren vorgesehen werden.

Nach einer bevorzugten Ausführungsform ist vorgesehen, daß die Stelltriebe aus gestellfest gelagerten Parallellenkern bestehen, deren inneren Koppelglieder die Heizelemente tragen, daß zum radialen Verstellen der Koppelglieder diese mit Gleitbolzen versehen sind, die in Langlöchern eines zu dem Koppelglied parallelen Verstellelements geführt sind, und daß zur radialen Verstellung der Verstellelemente Spindeltriebe vorgesehen sind. Die Spindeltriebe können durch eine angetriebene umlaufende Kette über Kegelräder angetrieben werden.

Zweckmäßigerweise sind zwischen den auf den größten Durchmesser verfahrenen Heizelementen gestellfeste Heizelemente angeordnet. Diese Ausgestaltung trägt dem Umstand Rechnung, daß sich der Abstand der Heizelemente in Umfangsrichtung verringert, wenn diese radial nach innen gefahren werden.

Zweckmäßigerweise sind die Heizelemente Infrarotstrahler.

Nach einer bevorzugten Ausführungsform der Erfindung ist vorgesehen, daß die länglichen Heizelemente schräg zur Achse der Schlauchfolienbahn angestellt sind. Diese Ausgestaltung stellt sicher, daß sämtliche Foliensektoren die Heizelemente überstreichen, wobei sich zweckmäßigerweise in axialer Richtung gesehen die Endbereiche der schräg gestellten Heizelemente überlappen können.

In weiterer Ausgestaltung der Erfindung ist vorgesehen, daß ein den Durchmesser der Schlauchfolienbahn abtastender Abstandsmesser vorgesehen ist, dessen Signale einem Steuergerät zugeführt werden, das den oder die Stellmotore zum Verfahren der Heizelemente auf die gewünschten Abstände steuert. Diese Ausgestaltung stellt sicher, daß in der erfindungsgemäßen Vorrichtung zwei dem Verstrecken von Schlauchfolienbahnen unterschiedlicher Durchmesser die Heizelemente immer selbsttätig auf dem richtigen radialen Abstand zu dem aufgeblasenen Folienschlauch einstellen.

Nach einer weiteren bevorzugten Ausführungsform ist vorgesehen, daß eine die Dichtenverteilung der Wanddicke über den Umfang der Schlauchfolienblase bzw. des flachgelegten und aus der Schlauchfolienblase abgezogenen Folienschlauches messende Einrichtung und ein Regler vorgesehen ist, der die den betreffenden Heizelementen zugeführte Heizenergie entsprechend der Abweichung der gemessenen Foliendicke von der mittleren Foliendicke (Soll-Wert) steuert. Nach dieser Ausgestaltung führt die Heizeinrichtung in Umfangsrichtung den einzelnen Foliensektoren unterschiedliche Wärmemengen zu, falls dies zum Ausgleich unterschiedlicher Wanddicken erforderlich sein sollte. Die unterschiedliche Erwärmung eines Folienschlauches über seinen Umfang zum Ausgleich von Dickenschwankungen ist bekannt und braucht daher hier nicht näher beschrieben zu werden.

Nach einer anderen Ausgestaltung ist vorgesehen, daß eine die Dickenverteilung der Wanddicke über den Umfang der Schlauchfolienblase bzw. des flachgelegten und aus der Schlauchfolienblase abgezogenen Folienschlauches messende Einrichtung und ein Regler vorgesehen sind, der die den einzelnen Heizelementen zugeordneten Stellmotore in der Weise steuert, daß den betreffenden Foliensektoren eine entsprechend größere oder kleinere Wärmemenge zugeführt wird. Nach dieser Ausgestaltung erfolgt die unterschiedliche Wärmezufuhr nicht durch Abstrahlung einer größeren oder kleineren Wärmeenergie von den Heizelementen, sondern durch entsprechende Vergrößerung oder Verkleinerung des radialen Abstandes der Heizelemente zu der Wand des Folienschlauches.

Ein Ausführungsbeispiel der Erfindung wird nachstehend anhand der Zeichnung näher erläutert. In dieser zeigt
- Fig. 1: eine Vorrichtung zum Aufblasen und Verstrecken einer von einer Vorratsrolle abgezogenen flachliegenden Schlauchfolienbahn in schematischer Darstellung,
- Fig. 2: eine vergrößerte Darstellung der Vorrichtung nach Fig. 1 mit einem den aufgeblasenen Folienschlauch einfassenden Ring aus Heizelementen, die auf ihren größten Ringdurchmesser verfahren sind,
- Fig. 3: eine der Fig. 2 entsprechende Vorrichtung, in der die den Ring bildenden Heizelemente auf ihren kleinsten Durchmesser verfahren sind,
- Fig. 4: Draufsichten auf die Ringe der Heizelemente entsprechend den Schnitten IV - IV in den Fig. 2 und 3 und
- Fig. 5: eine Draufsicht auf die Heizelemente entlang dem Schnitt V - V in Fig. 4.

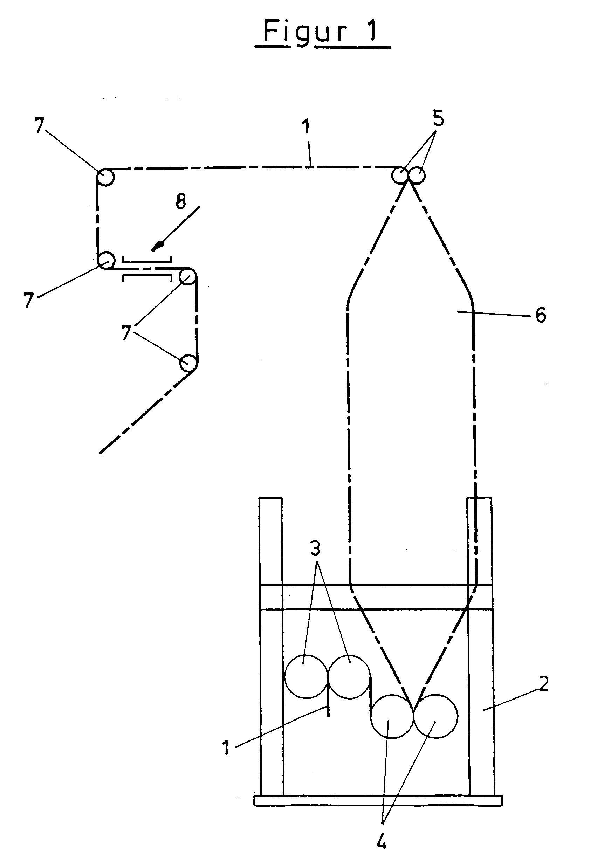

Aus Fig. 1 ist schematisch eine Vorrichtung zum Abziehen einer Kunststoffschlauchfolienbahn von einer nicht dargestellten Schlauchfolienrolle ersichtlich, in der die Schlauchfolienbahn 1 von in einem Gestell 2 gelagerten angetriebenen Vorzugsrollenpaaren 3, 4 vorgezogen wird. Oberhalb des Vorzugsrollenpaares 4 ist ein Abquetsch- und Abzugsrollenpaar 5 im Gestell oder ortsfest gelagert, das den erneut verstreckten Folienschlauch aus der Schlauchfolienblase 6 abzieht und flachlegt. Die flachgelegte und erneut verstreckte Schlauchfolienbahn 1 läuft über Umlenkrollen 7 und ein Dickenmeßgerät 8 zu einer Aufwickelvorrichtung, in der die Schlauchfolienbahn 1 erneut zu einer Schlauchfolienrolle aufgewickelt wird.

Die Vorrichtung entspricht ihrem grundsätzlichen Aufbau nach der aus DE198 44 434.6 bekannten Vorrichtung, auf die zur näheren Darstellung Bezug genommen wird.

In dem Gestell ist die Heizeinrichtung 10 zum Erwärmen des aufgeblasenen Abschnitts der Schlauchfolienbahn 1 gehaltert. In der Heizeinrichtung 10 wird die Schlauchfolienbahn derart erwärmt, daß sie aufgrund des Innendrucks beim Austritt aus der Heizeinrichtung 10 zu der Schlauchfolienblase 1' aufgeblasen wird. Die Heizeinrichtung 10 besteht aus einem die Schlauchfolienbahn einfassenden Gehäuse 11, das an seinen oberen und unteren Enden Irisblenden 12, 13 trägt, die auf den Durchmesser des eintretenden Folienschlauches und den Durchmesser des austretenden Folienschlauches, der bereits teilweise zu dem Durchmesser der Schlauchfolienblase 1' aufgeblasen ist, einstellbar sind, um Wärmeverluste zu vermeiden.

In dem Gehäuse sind an Trägern 14, die in gleichmäßigen Abständen auf einen den Folienschlauch 1 konzentrisch einfassenden Ring angeordnet sind, Parallellenker 15, 16 schwenkbar gelagert, die an ihren inneren Enden gelenkig durch ein Doppelglied 17 verbunden sind. Die Lenker 15, 16 tragen Bolzen 18, die in Langlöchern 19 eines aus einem Flacheisen bestehenden Verstellelements 20 geführt sind. Das Verstellelement 20 ist rechtwinkelig mit einer Spindel 22 verbunden, die in eine im Gestell drehbar gelagerte Spindelmutter 23 eingeschraubt ist. Sämtliche den Spindeln 22 zugeordneten Spindelmuttern 23 tragen Kegelräder 24, die mit gestellfest gelagerten Gegenkegelrädern 25 kämmen, wobei auf die die Gegenkegelräder 25 tragenden um in Gestell gelagerten Wellen 26 Kettenräder 27 aufgekeilt sind, über die eine gemeinsame Antriebskette 28 läuft. Die Antriebskette 28 wird über einen Getriebemotor 29 angetrieben, dessen Ausgangskettenrad 30 über eine Kette 31 mit einem Kettenrad 32 in Antriebsverbindung steht, das auf eine ein Gegenkegelrad 25 und ein Kettenrad 27 tragende Welle 26 aufgekeilt ist.

Im Gestell ist weiterhin ein Abstandssensor 35 gehaltert, der den jeweiligen Durchmesser der eingezogenen und zu einem Schlauch aufgeblasenen Schlauchfolienbahn 1 mißt. Die Signale des Abstandssensors 35 werden einem Rechner 36 zugeführt, der entsprechend dem gemessenen Durchmesser des eingezogenen und aufgeblasenen Folienschlauches über den Motor 29 und die beschriebenen Triebe die Verstellelemente 17 auf den erforderlichen radialen Abstand zu dem Folienschlauch 1 einstellt. Die Verstellelemente 17 tragen Infrarotheizelemente, deren Energieversorgung von dem Rechner 36 gesteuert bzw. geregelt wird.

Sind Dickenunterschiede in Foliensektoren der Schlauchblase 1 auszugleichen, die von dem Dickenmeßgerät 8 erfaßt worden sind, führt der Rechner den in entsprechenden Foliensektoren zugeordneten Infrarotstrahlern eine entsprechend erhöhte oder verringerte Energie zu.

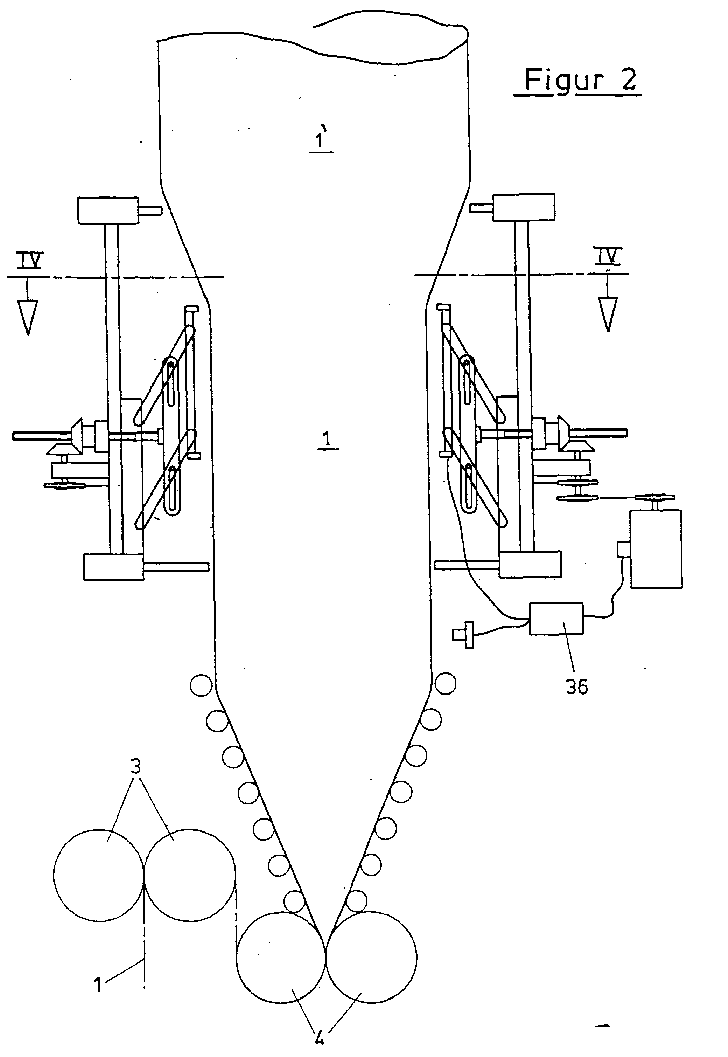

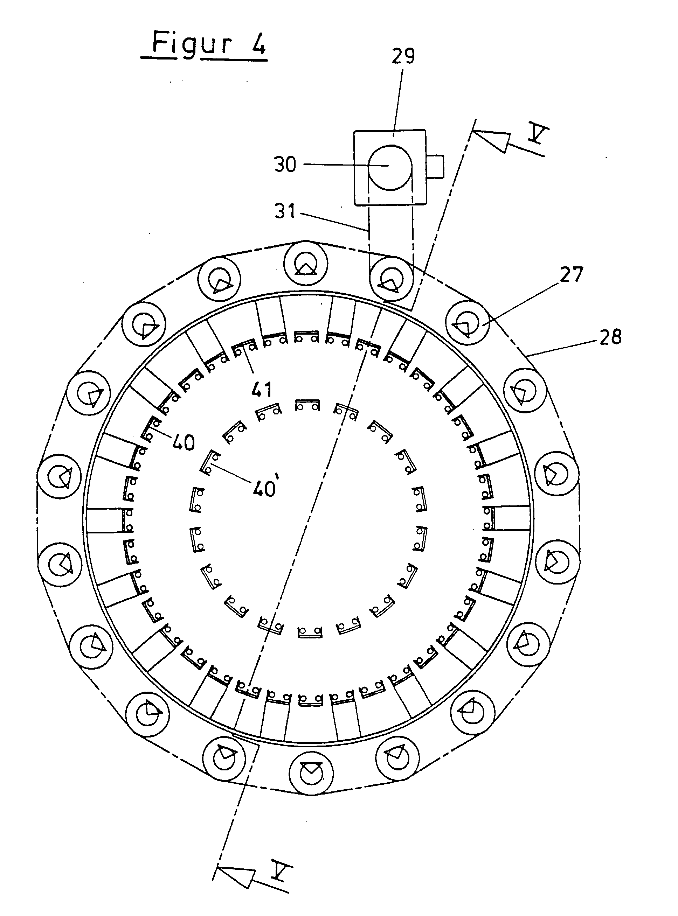

Aus Fig. 4 ist ersichtlich, daß zwischen den auf ihren größten radialen Abstand verfahrenen Infrarotstrahlern 40 gestellfeste Infrarotstrahler 41 angeordnet sind. In Fig. 4 befinden sich die auf dem äußeren Ring befindlichen Infrarotstrahler 4 in ihrem auf ihren größten Durchmesser verfahrenen Zustand, der dem aus Fig. 2 ersichtlichen Zustand entspricht.

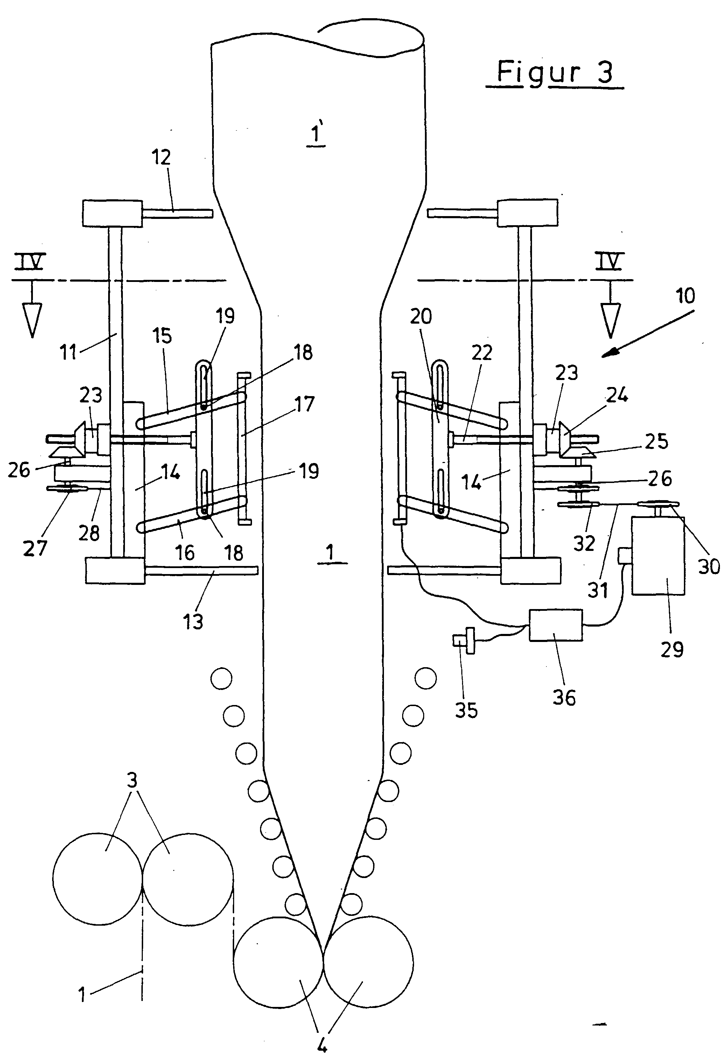

Weiterhin sind aus Fig. 4 die auf ihren kleinsten Durchmesser verfahrenen Infrarotstrahler 40' ersichtlich, die sich auf dem inneren Ring befinden. Dieser Zustand ist in Fig. 3 dargestellt.

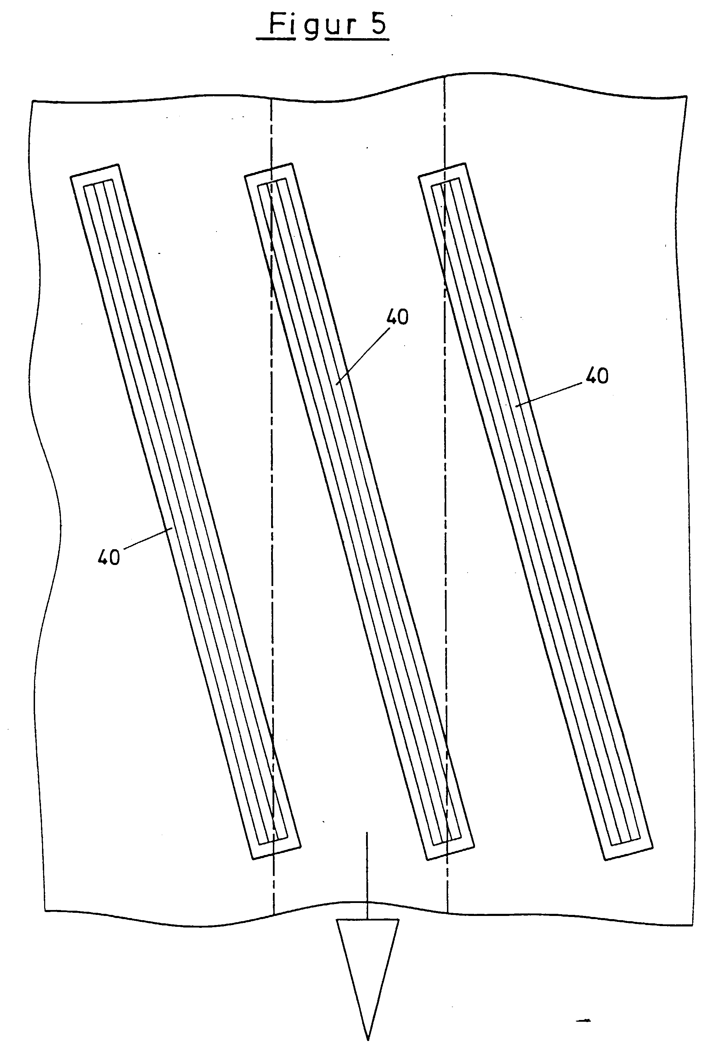

Auf den einzelnen radial verstellbaren Verstellelementen 17 sind die Infrarotstrahler 40 in der aus Fig. 5 ersichtlichen Weise schräg angeordnet, so daß die Infrarotstrahler 40 sich in axialer Richtung gesehen mit ihren Endbereichen überlappen können, so daß den einzelnen Foliensektoren durch diese Schrägstellung im wesentlichen die gleiche Wärmemenge zugeführt wird.

## Patentansprüche

1. Vorrichtung zum Erwärmen einer zwischen einem Vorzugsrollenpaar (4) und einem Abzugsrollenpaar (5) zu einer Schlauchfolienblase (1') aufgeblasenen Schlauchfolienbahn (1)
mit einem in einem Gestell (2) gelagerten, angetriebenen Vorzugsrollenpaar (4) für eine flachliegende Schlauchfolienbahn (1),
mit einem gegenüberliegenden, ortsfest gelagerten, angetriebenen Abzugsrollenpaar (5) für die aus der aufgeblasenen Schlauchfolienblase (1') abgezogene flachgelegte Schlauchfolienbahn, dem Flachlegeeinrichtungen, vorzugsweise keilförmig zueinander angeordnete Flachlegeplatten, vorgeschaltet sind,
mit Einrichtungen zum Aufblasen der Schlauchfolienbahn (1) zwischen dem Vor- und Abzugsrollenpaaren (4, 5) zu einer Schlauchfolienblase (1') und zum Nachfüllen von Blasluft und mit einer Einrichtung zum Erwärmen der aufgeblasenen Schlauchfolienbahn,
dadurch gekennzeichnet,
daß die Einrichtungen zum Erwärmen aus konzentrisch um die Achse der aufgeblasenen Schlauchfolienbahn (1) angeordneten Heizelementen (40) besteht, die durch Stelltriebe in radialer Richtung auf die Schlauchfolienbahn (1) verfahrbar und von dieser abrückbar sind.

2. Vorrichtung nach Anspruch 1, dadurch gekennzeichnet, daß die Stelltriebe sämtliche Heizelemente (40) gleichzeitig in radialer Richtung bewegen.

3. Vorrichtung nach Anspruch 2, dadurch gekennzeichnet, daß die Stelltriebe aus gestellfest gelagerten Parallellenkern 15, 16 bestehen, deren inneren Koppelglieder (17) die Heizelemente (40) tragen, daß zum radialen Verstellen der Koppelglieder (17) diese mit Gleitbolzen (18) versehen sind, die in Langlöchern (19) eines zu den Koppelgliedern (17) parallelen Verstellelements (20) geführt sind, und daß zur radialen Verstellung der Verstellelemente (20) Spindeltriebe (22) bis 26 vorgesehen sind.

4. Vorrichtung nach einem der Ansprüche 1 bis 3, dadurch gekennzeichnet, daß die Spindeltriebe (22 bis 25) durch eine angetriebene umlaufende Kette (28) über Kegelräder (24, 25) angetrieben werden.

5. Vorrichtung nach einem der Ansprüche 1 bis 4, dadurch gekennzeichnet, daß zwischen den auf den größten Durchmesser verfahrenen Heizelementen (40) gestellfeste Heizelemente (41) angeordnet sind.

6. Vorrichtung nach einem der Ansprüche 1 bis 5, dadurch gekennzeichnet, daß die Heizelemente (40, 41) Infrarotstrahler sind.

7. Vorrichtung nach einem der Ansprüche 1 bis 6, dadurch gekennzeichnet, daß die länglichen Heizelemente (40, 41) schräg zur Achse der aufgeblasenen Schlauchfolienbahn (1) gestellt sind.

8. Vorrichtung nach einem der Ansprüche 1 bis 7, dadurch gekennzeichnet, daß ein den Durchmesser des aufgeblasenen Folienschlauches abtastender Abstandsmesser (35) vorgesehen ist, dessen Signale einem Steuergerät (36) zugeführt werden, das den oder die Stellmotore (29) zum Verfahren der Heizelemente (40) auf die gewünschten Abstände einstellt.

9. Vorrichtung nach einem der Ansprüche 1 bis 8, dadurch gekennzeichnet, daß eine die Dickenverteilung der Wanddicken über den Umfang der Schlauchfolienblase bzw. des flachgelegten aus der Schlauchfolienblase abgezogenen Folienschlauches messende Einrichtung (8) und ein Regler (36) vorgesehen sind, der die den betreffenden Heizelementen zugeführte Heizenergie entsprechend der Abweichung der gemessenen Foliendicke von der mittleren Foliendicke (Soll-Wert) steuert.

10. Vorrichtung nach einem der Ansprüche 1 bis 8, dadurch gekennzeichnet, daß eine die Dickenverteilung der Wanddicke über den Umfang der Schlauchfolienblase bzw. des flachgelegten aus der Schlauchfolienblase abgezogenen Folienschlauches messende Einrichtung (8) und ein Regler (36) vorgesehen sind, der den einzelnen Heizelementen zugeordnete Stellmotore in der Weise steuert, daß den diesen zugeordneten Foliensektoren eine entsprechend größere oder kleiner Wärmemenge zugeführt wird.
